# EUROPEAN PATENT APPLICATION

(11) **EP 4 199 282 A1**
(43) Date of publication of application: **21.06.2023**
(21) Application number: 21215160.9
(22) Date of filing: 16.12.2021
(51) Int. Cl.: H02G 3/32

(54) **ASSEMBLY FOR THE QUICK INSTALLATION OF A CABLE HARNESS**

(71) Applicant: Tyco Electronics UK Ltd, Wiltshire SN3 5HH (GB)
(72) Inventor: KOPINSKI, Tomasz, Swindon, SN3 5HH (GB); EYLES, Jonathan Mark, Swindon, SN3 5HH (GB)
(74) Representative: Grünecker Patent- und Rechtsanwälte PartG mbB

(57) **Abstract**

The invention relates to an assembly (1) for fixating at least one cable harness (13) comprising one or more cables (9) to a structure (11), in particular to an airframe (12). In order to facilitate the installation and to save installation time, the assembly (1) comprises at least one cable clamp (5) with a receiving section (61) for receiving at least one cable (9) and at least one clamp bracket (3) comprising a plurality of similar clamp mounting receptacles (21) arranged in a row (23), wherein the at least one cable clamp (3) and each clamp mounting receptacle (21) comprise mutually compatible fixation elements (25, 69) that are repeatedly mountable to and releasable from each other.

## Description

The invention relates to an assembly for fixating at least one cable harness comprising one or more cables to a structure, in particular to an airframe.

A cable harness comprises cable bundles and/or single cables. The installation of a cable harness to a structure, such as an airframe, can be a time-consuming process. Often, a cable harness is directly attached to a structure using cable ties in order to fixate the harness thereto. Fixating a cable harness with cable ties to a structure is a time-consuming process and may lead to increased production costs. It is always an object to reduce installation times and therefore costs, in particular when producing technologically sophisticated products such as airplanes.

It is thus that the object of the invention to provide an assembly with which a cable harness can be fixated to a structure, in particular to an airframe of an airplane, in a quick and reliable manner.

For the assembly of the aforementioned type, this object is achieved by an assembly that comprises at least one cable clamp with a receiving section for receiving at least one cable and at least one clamp bracket comprising a plurality of similar clamp mounting receptacles arranged, in particular side by side, in a row, wherein the at least one cable clamp and each clamp mounting receptacle comprise mutually compatible fixation elements that are repeatedly mountable to and releasable from each other.

The assembly according to the invention solves the object of the invention. As the assembly consists of at least two parts, namely the clamp bracket and the at least one cable clamp, one or more cable clamps can be installed on the cables or cable bundles of a cable harness before the installation of the harness to the structure at a final assembly line. In order to fixate the at least one cable clamp on a cable or cable bundle, the cable or cable bundle can be received in the receiving section. The cable or cable bundle can then be fixated in the receiving section using a cable tie or another suitable element. The harness may thus be prepared with one or more cable clamps before the final assembly steps.

At the final assembly line, the structure can be provided with the clamp bracket. The cable harness can then be installed by simply mounting the at least one cable clamp to the cable bracket. The installation time, in particular at the final assembly line for manufacturing an airplane, can thus be reduced. Due to the plurality of clamp mounting receptacles, a plurality of cable clamps can be mounted on a single clamp bracket.

In the receiving section of a cable clamp, a single cable or a cable bundle can be received. For the sake of brevity, reference is made to a single cable only in the following text.

In the following, further improvements of the invention are described. The additional improvements may be combined independently of each other, depending on whether a particular advantage of a particular improvement is needed in a specific application.

The clamp bracket may have the overall shape of a longitudinal beam or bar, where in the row of clamp mounting receptacles extends along the longitudinal direction of the clamp bracket. Preferably, at least one cable extends perpendicular to this longitudinal direction in a mounted state, in which it is mounted via the at least one cable clamp on the clamp bracket. The cable direction is preferably parallel with a width direction of the clamp bracket.

The clamp mounting receptacles are preferably accessible for the at least one cable clamp along parallel mounting directions, the mounting directions being perpendicular to the longitudinal direction and perpendicular to the direction of the cable.

In order to fixate the at least one cable clamp on the clamp bracket in a simple and time saving manner, the mutually compatible fixation elements are preferably configured as at least one latching member and at least one latching receptacle for the latching member.

In particular, the at least one latching member may have a hook-shaped cross-section. Thus, a simple but reliable structure for the latching member can be obtained. The hook may be provided with an abutment surface on a free end for abutting a stop surface in the latching receptacle in a mounted state.

Preferably, the at least one cable clamp comprises the latching member and the clamp mounting receptacle comprises the at least one latching receptacle.

The latching receptacle may comprise a through slot that is configured for the insertion of a latching member, wherein a cross sectional width of the through slot is smaller than a cross sectional width of a hook-shaped latching member and wherein the through slot opens into a compartment for the hook-shaped latching member, the compartment having a cross sectional width being at least the width of the hook-shaped latching member.

The clamp bracket may be provided with at least one cut-out through which the compartment is accessible from the outside for a removal tool to release the hook-shaped latching member from a latched state in the compartment. To do so, a removal tool may, for example, compress the hook-shaped latching member such that it can be pulled through the through slot of the latching receptacle, thereby releasing the cable clamp from the clamp bracket.

According to an advantageous improvement of a latching member, the latching member may be part of a leg that extends away from the cable clamp or the clamp mounting receptacle. The leg may be provided with a hook shaped bend at its free end, forming the latching member. The leg can be inserted into the latching receptacle for mounting a cable clamp to the clamp bracket at a clamp mounting receptacle.

The at least one cable clamp and the clamp mounting receptacle may each comprise at least two separate fixation elements which are spaced apart from each other. Thus, the safety and stability of the connection of a cable clamp to the clamp bracket may be improved.

Preferably, at least two separate fixation elements are spaced apart along the cable direction of the clamp bracket in the mounted state. The at least two separate fixation elements may be arranged on opposite sides of the cable clamp and/or of the clamp mounting receptacle. In the case, the latching member is part of a leg, the two separate fixation elements are preferably spaced apart from each other in a direction perpendicular to a mounting direction of the legs.

As mentioned in the beginning, a cable can be received in the receiving section of the cable clamp and fixated thereto using a cable tie or other suitable means. In order to facilitate the fixation of a cable to the cable clamp, at least one through slot for a cable tie preferably extends through the cable clamp between the at least two fixation elements of the same, when viewed along a mounting direction along which the mutually compatible fixation elements are mounted to each other.

A cable tie space for receiving a cable tie of a cable clamp in the mounted can be arranged between the at least two separate fixation elements of a clamp mounting receptacle. Thus, space for the cable tie may be provided.

The cable tie space preferably extends parallel with a longitudinal direction of the clamp bracket. In other words, the cable tie space extends perpendicular to the cable direction. The cable tie space preferably extends along the clamp bracket over a plurality of clamp mounting receptacles, more preferably over all clamp mounting receptacles of the clamp bracket.

The cable tie space may have the overall shape of a groove, in particular a groove extending parallel with a longitudinal direction of the clamp bracket.

In order to define the position for a cable tie and to guide a cable tie when the cable tie is installed on a cable clamp that is already latched to the clamp bracket, at least one guiding protrusion for guiding the cable tie may protrude from the clamp bracket between the at least one fixation element of a clamp mounting receptacle and the corresponding cable tie space.

Preferably, the at least one guiding protrusion borders the cable tie space. The at least one guiding protrusion may separate a latching receptacle from the cable tie space. Preferably, two guiding protrusions may border the cable tie space from two opposing sides.

A longitudinal direction of the clamp bracket preferably extends along the row of the clamp mounting receptacles, wherein two fixation elements of a clamp mounting receptacle are arranged on two opposing sides of the clamp bracket, spaced apart in a width direction of the clamp bracket and separated from each other by at least one intermediate wall, the width direction being perpendicular to the longitudinal direction. The intermediate wall may continue into a guiding protrusion for a cable tie. The width direction preferably extends perpendicular to the longitudinal direction and to the mounting direction.

In the case where the fixation elements of the clamp mounting receptacle are formed by latching receptacles, two intermediate walls may be present, wherein each intermediate wall forms a wall of the corresponding latching receptacle.

According to an advantageous embodiment of the cable clamp, the cable clamp may be configured for being fixated to two adjacent clamp mounting receptacles of the clamp bracket. Thereby, the cable clamp can be configured to receive large cables or cable bundles. The receiving section may extend over two clamp mounting receptacles. A cable clamp that is configured for being fixated to two adjacent clamp mounting receptacles is preferably provided with four fixation elements, in particular four latching members. More preferably, such a cable clamp is provided with four legs, wherein each leg is configured as a latching member. Each of the two clamp mounting receptacles is preferably provided with two latching receptacles. Thus, the two clamp mounting receptacles provide four latching receptacles for the four latching members.

The at least one cable clamp may have two elastically deflectable clamping protrusions for clamping the at least one cable or a cable bundle of a cable harness, the clamping protrusions forming the receiving section. Preferably, the elastically deflectable clamping protrusions are provided with locking means at their ends. The locking means may be formed as slots for a cable tie. The two elastically deflectable clamping protrusions can thus be tied together, thereby closing the receptacle to fixate the at least one cable.

The clamp bracket may comprise a monolithically formed material bridge between two adjacent clamp mounting receptacles, the material bridge having a reduced cross section compared to the clamp bracket in the region of a clamp mounting receptacle. The clamp bracket may thus be bendable to be mounted to curved surfaces.

Bending of the clamp bracket can be facilitated by heating the clamp bracket and shaping the same on a fixture that defines the curved shape. After cooling the clamp bracket, the clamp bracket will remain its shape and can be installed on a curved surface.

Preferably, the clamp bracket including the clamp mounting receptacles is a monolithic piece, in particular made from a polymer material, preferably from a thermoplastic material.

The clamp bracket is preferably configured for being fixated to a structure, such as an airframe. The clamp bracket may be provided with at least one fixation element. A simple fixation element can be achieved by a through hole for a screw or a rivet in order to fixate the clamp bracket to the structure via a screw joint or a rivet joint.

The assembly may further comprise at least one cable tie for the at least one cable clamp. The cable tie may be fixated to the cable clamp in an undetachable manner in the mounted state.

The invention also relates to a set comprising at least one clamp bracket and a plurality of cable clamps of an assembly according to the invention, wherein at least one cable clamp of the plurality of cable clamps are provided with receiving sections that differ in size and/or form from each other. In particular, at least one cable clamp may be configured for receiving at least one cable or cable bundle of a first diameter range and at least one other cable clamp of the plurality of cable clamps may be configured for receiving at least one cable or cable bundle of a second diameter range, the second diameter range being different from the first diameter range. Thus, cables and cable bundles of different diameters can be fixated to the clamp bracket.

The invention further relates to a set comprising at least one clamp bracket and a plurality of cable clamps of an assembly according to the invention, wherein at least one cable clamp of the plurality of cable clamps is configured to be mounted to one clamp mounting receptacle and at least one other cable clamp of the plurality of cable clamps is configured to be mounted to at least two, in particular adjacent, clamp mounting receptacles, in particular of the row of clamp mounting receptacles. Thereby, even large cables or cable bundles can be securely fixated to the clamp bracket.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows an advantageous embodiment of an assembly according to the invention with three cables in a perspective view;
- Fig. 2: shows a cable with an attached cable clamp in a perspective view;
- Fig. 3: shows a clamp bracket of the assembly shown in Fig. 1 without mounted cables in a perspective view;
- Fig. 4: shows a section of the clamp bracket of Fig. 3 in an enlarged view;
- Fig. 5: shows the backside of the clamp bracket from Fig. 4;
- Figs. 6-8: show different embodiments of cable clamps;
- Fig. 9: shows a cut view through the clamp bracket of Fig. 1;
- Fig. 10: shows a cut view to the clamp bracket of Fig. 1 with an inserted cable clamp;
- Fig. 11: shows a second embodiment of a clamp bracket in a perspective view from above; and
- Fig. 12: shows the backside of the clamp bracket from Fig. 11 in a perspective view.

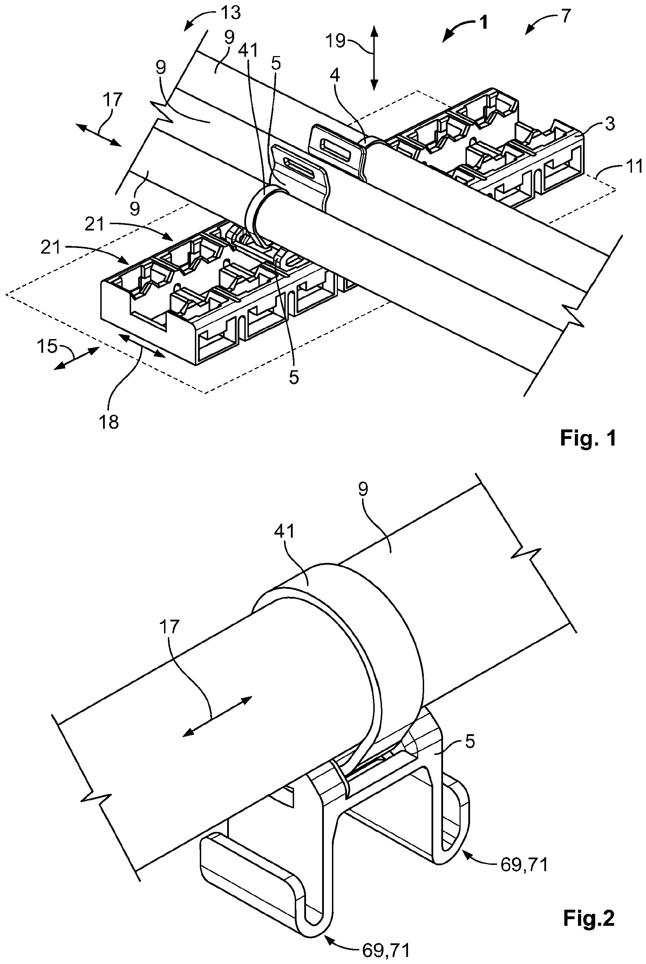

In the following, a first advantageous embodiment of an assembly 1, comprising a clamp bracket 3 and cable clamps 5 is described with respect to Fig. 1. The assembly 1 comprises different cable clamps 5 and thus forms a set 7 according to the invention.

The assembly 1 can be used for fixating one or more cables 9 to a structure 11 (only indicated by the dashed line in Fig. 1). The structure 11 may in particular be an airframe 12 of an airplane (not shown).

The at least one cable 9 may be part of a cable harness 13. Just for explanatory reasons, 3 cables 9 are shown in Fig. 1. Instead of single cables 9, cable bundles can be attached to the clamp bracket 3 using a cable clamp 5. For the sake of brevity, reference is made to cables 9 only in the following.

The clamp bracket 3 has an overall longitudinal shape and extends along a longitudinal direction 15. In a mounted state, the cables 9 extend parallel with a cable direction 17, that is preferably perpendicular to the longitudinal direction 15. The cable direction 17 is parallel with a width direction 18 of the clamp bracket 3.

A mounting direction 19 extends perpendicular to the longitudinal direction 15 and to the cable direction 17. The mounting direction 19 is the direction, along which cable clamps 5 can be mounted to the clamp bracket 3.

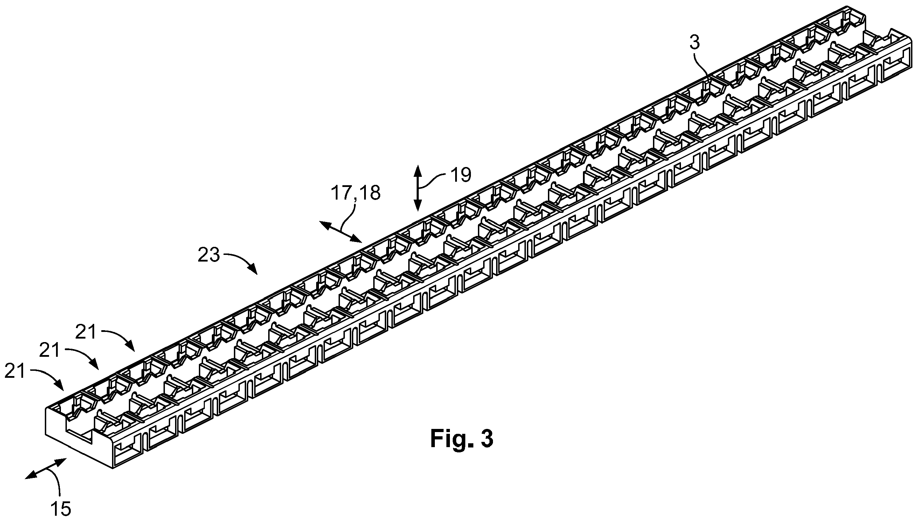

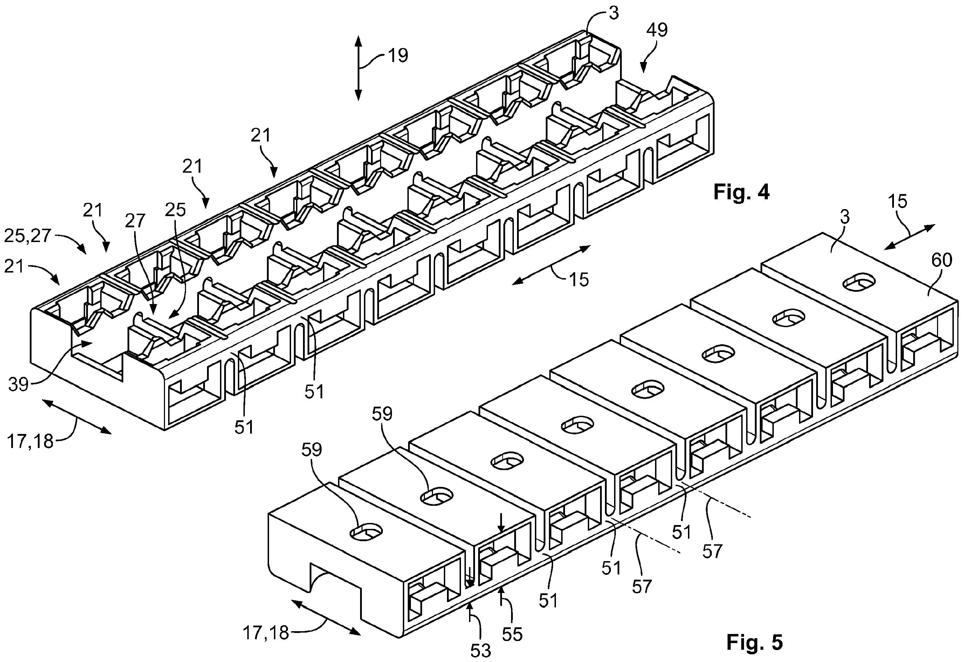

In the following, further details of the components of the assembly 1 are described with respect to Figs. 1 to 10.

The clamp bracket 3 comprises a plurality of clamp mounting receptacles 21 that are arranged in a side-by-side manner, forming a row 23, that extends along the longitudinal direction 15.

Each clamp mounting receptacle 21 can be used for receiving a cable clamp 5 or at least a part thereof. In the following, the clamp mounting receptacles 21 are described in further detail by referring to a single clamp mounting receptacle 21. Preferably all clamp mounting receptacles 21 of one clamp bracket are identical. Thus, describing one of the clamp mounting receptacles 21 is sufficient for the understanding of the invention.

The clamp mounting receptacle 21 has an overall longitudinal shape extending along the cable direction 17. The clamp mounting receptacle 21 is provided with two fixation elements 25, which are formed as latching receptacles 27. The latching receptacles 27 are separated from each other and spaced apart from each other along the width direction 18.

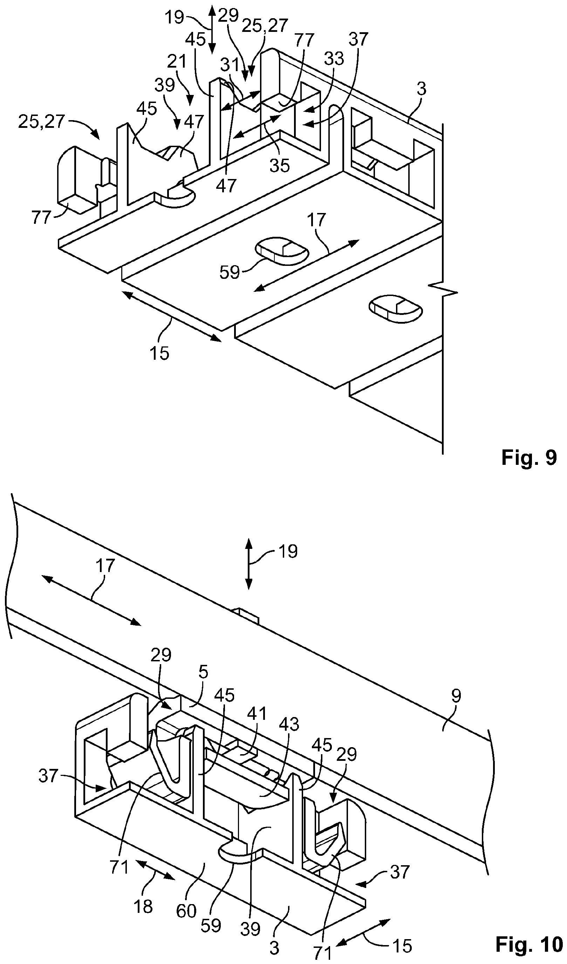

A cut view, with a cut parallel with the width direction 18 and the mounting direction 19 through a clamp mounting receptacle 21 is shown in Fig. 9.

Each latching receptacle 27 has a through slot 29 having a cross sectional width 31. The through slot 29 extends along the mounting direction 19 into the clamp bracket 3 and opens into a compartment 33 having a width 35 that is larger than the width 31. Both widths 31 and 35 are preferably measured parallel with the width direction 18.

The compartment 33 is accessible via a cut-out 37 from the outside. The cut-out 37 can be used for a removal tool for removing a cable clamp 5 from the clamp bracket 3. The cut-out 37 extends along the width direction 18.

The two latching receptacles 27 are preferably identically formed, but orientated in a mirror-inverted way. Thus, the two cut-outs 37 extend into the clamp bracket 3 from two opposing sides.

Between the two latching receptacles 27, a cable tie space 39 is arranged for receiving a cable tie 41 of a cable clamp 5. Moreover, the cable tie space 39 can be used for receiving a lower part 43 of a clamp bracket 5. The lower part 43 may, in particular, be a bottom wall of a cable clamp 5. The bottom wall can be used for guiding a cable tie 41 through the cable clamp 5.

Each latching receptacle 27 is closed by a intermediate wall 45, wherein each intermediate wall 45 separates the latching receptacle 27 from the cable tie space 39. The intermediate wall 45 may be continuously closed, but this is not mandatory.

Preferably, each intermediate wall 45 is provided with a guiding protrusion 47 that projects along the mounting direction 19 away from the remaining clamp bracket 3. The guiding protrusions 47 may help in guiding a cable tie 41, in particular in the case in which a cable tie 41 is inserted in a cable clamp 5 that is already mounted on the clamp bracket 3.

The cable tie space 39 extends between the two guiding protrusions 47 of one clamp mounting receptacle 21. The cable tie space 39 preferably extends as a groove 49 along the longitudinal direction 15 of the clamp bracket 3.

More preferably, the cable tie spaces 39 of the plurality of clamp mounting receptacles 21 form a continuous groove 49 that extends along the longitudinal direction 15 through the clamp bracket 3 over all of the clamp mounting receptacles 21.

The clamp bracket 3 is preferably provided with monolithically formed material bridges 51 between two adjacent clamp mounting receptacles 21. The material bridges 51 may have a reduced cross-section 53 compared to a cross-section 55 of the clamp bracket 3 in the region of a clamp mounting receptacle 21, the cross sections 53 and 55 being viewed along the mounting direction 19.

Due to the reduced cross-section 53, the clamp bracket 3 may be bendable along bending axes 57 that extend through the material bridges 51 parallel with the width direction 18. Thus, the clamp bracket 3 can be installed on curved surfaces in a manner wherein the clamp bracket 3 follows the curvature of the surface.

Bending of the clamp bracket can be facilitated by heating the clamp bracket 3 and shaping the same on a fixture (not shown) that defines the curved shape. After cooling the clamp bracket 3, the clamp bracket 3 will remain its shape and can be installed on the curved surface.

In order to securely fixate the clamp bracket 3 to a structure, in particular to an airframe, the clamp bracket 3 is preferably provided with a plurality of through holes 59 in a bottom 60 of the clamp bracket 3. The through holes 59 can be used for forming a screw-joint, a rivet-joint, or other type of joint. The through holes 59 can be arranged in the region of the cable tie space 39.

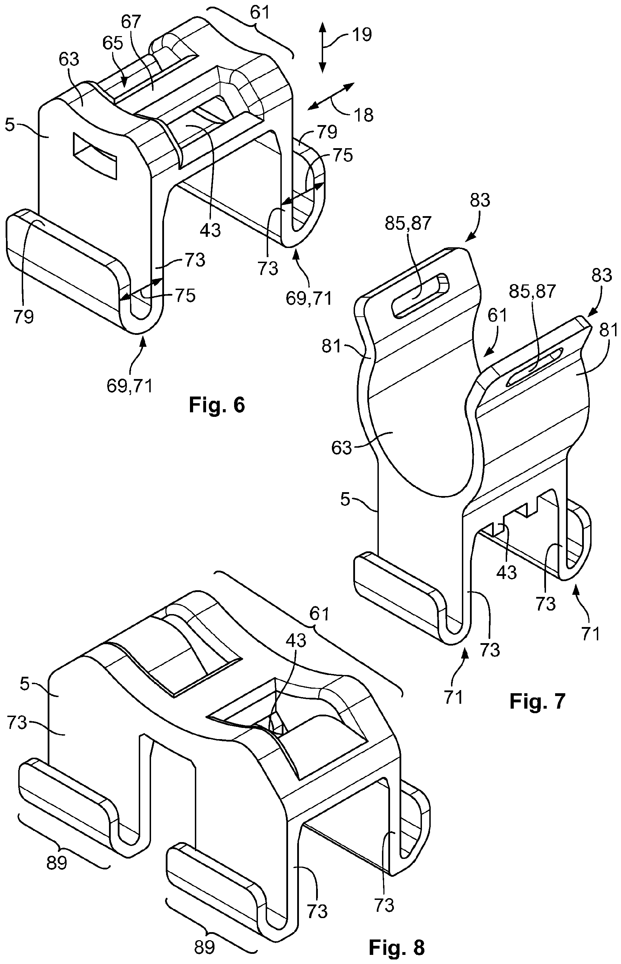

In the following, a first advantageous embodiment of a cable clamp 5 is described with respect to Fig. 6. This embodiment of the cable clamp corresponds to the cable clamp 5 which is exemplarily shown in Figs. 2 and 10.

The cable clamp 5 has a receiving section 61 for a cable 9 or a cable bundle. The receiving section 61 may have a curved surface 63 that follows the curvature of a cable 9. The surface 63 thus may have an overall concave shape that is complementary to a cylinder.

The cable tie 5 is provided with a through slot 65 for a cable tie 41 (not shown here). The through slot 65 may be arranged between a lower part 43 and a beam 67 of the cable tie 5, were in an upper side of the beam 67 forms part of the surface 63.

A cable tie 41 may extend through the through slot 65 and around a cable 9. This is exemplarily shown in Fig 2. A cable 9 or a bundle of cables may thus be securely fixated to the cable tie 5. In order to attach the cable tie 5 to the clamp bracket 3, the cable tie 5 is provided with two fixation elements 69 that are mutually compatible to the fixation elements 25 of a clamp mounting receptacle 21.

As the fixation elements 25 of the clamp mounting receptacle 21 in the exemplary embodiment are shaped as latching receptacles 27, the fixation elements 69 of the cable clamp 5 are shaped as latching members 71. The latching members 71 are adapted for being inserted into the latching receptacles 27. Thus, the latching members 71 each have an overall hook shaped cross section.

Each latching members 71 is part of a leg 73 that extends away from the remaining cable clamp 5, in particular away from the receiving section 61. The legs 73 and the latching member 71 of a cable clamp 5 can be identically shaped. However, this is not mandatory.

The two legs 73 are spaced apart from each other along a width direction, that is identical to the width direction 18 of the clamp bracket 3, when the cable clamp 5 is mounted to the clamp bracket 3.

The cable clamp 5 can be mounted along the mounting direction 19 by inserting the latching member 71 into the latching receptacles 27. Thereby, each of the hook shaped latching members 71 passes through the corresponding through slot 29 until it is arranged in the corresponding compartment 33.

During the passage through the through slot 29, each latching member 71 is compressed along the width direction 18, because the cross-sectional width 31 of the through slot 29 is smaller than a cross sectional width 75 of the latching members 71.

When a latching member 71 has passed the through slot 29 and reached the compartment 33, the latching member 71 deflects back into its original shape and is secured in the compartment 33. When arranged in the compartment 33, the latching member 71 may abut an abutment surface 77 of the latching receptacle 27 with its free end 79.

The passage of the latching members 71 of the cable clamp 5 through the through slots 29 is shown in Fig. 10. In the situation shown in Fig. 10, the latching members 71 are still compressed in the through slots 29 prior to reaching the compartments 33.

In order to release a cable clamp 5 from the clamp bracket 3, a removal tool (not shown) can be inserted through each cut-out 37 for compressing the corresponding latching member 71. The latching members 71 can then be pulled through the through slots 29 out of the latching receptacles 27.

Next, a second advantageous embodiment of a cable clamp 5 is described with respect to Fig. 7. For the sake of brevity, only the differences to the cable clamp 5 described with respect to Fig. 6 are explained in detail.

The cable clamp 5 is provided with two elastically deflectable clamping protrusions 81 that may together form the overall shape of a cylinder wall, or a section thereof. The clamping protrusions 81 define the cable receiving section 61 between them.

A cable 9 can be arranged between the two protrusions 81. At their free ends 83, the protrusions 81 are provided with locking means 85. Simple locking means 85 can be formed by through slots 87. A cable tie 41 (not shown) can be installed on the cable clamp 5 by guiding the cable tie 41 through both through slots 87 and closing the cable tie 41. Thereby, the receiving section 61 is fully closed and a cable 9 arranged therein is fixated. Preferably, the two protrusions 81 are thereby pressed together and compress a cable 9 arranged between them.

This cable clamp 5 may be advantageous in a situation as depicted in Fig. 1 for the following reason: The free ends 83 with the through slots 87 are still accessible for an operator, even in the case when other cable clamps 5 are installed adjacent to the cable clamp 5 with the protrusions 81. Due to the protrusions 81 protruding away from the clamp bracket 3, a cable 9 can still be fixated by installing the cable tie through the through slots 87.

Another advantageous embodiment of a cable clamp 5 is now described with respect to Fig. 8. Again, only the differences to the cable clamps 5 described above are explained in detail.

The cable clamp 5 shown in Fig. 8 is configured for being mounted to two adjacent clamp mounting receptacles 21. This may be of advantage when a large cable 9 or a large cable bundle is to be fixated on the clamp bracket 3.

Thus, the cable clamp 5 is provided with four legs 73, wherein the legs 73 are preferably identical to the legs 73 of the cable clamps 5 described above. The four legs 73 form two pairs 89 of legs 73, wherein each pair 89 is configured for being received in the two latching receptacles 27 of one clamp mounting receptacle 21.

In the mounted state, the receiving section 61 of the cable clamp 5 extends over the length of two adjacent clamp mounting receptacles 21.

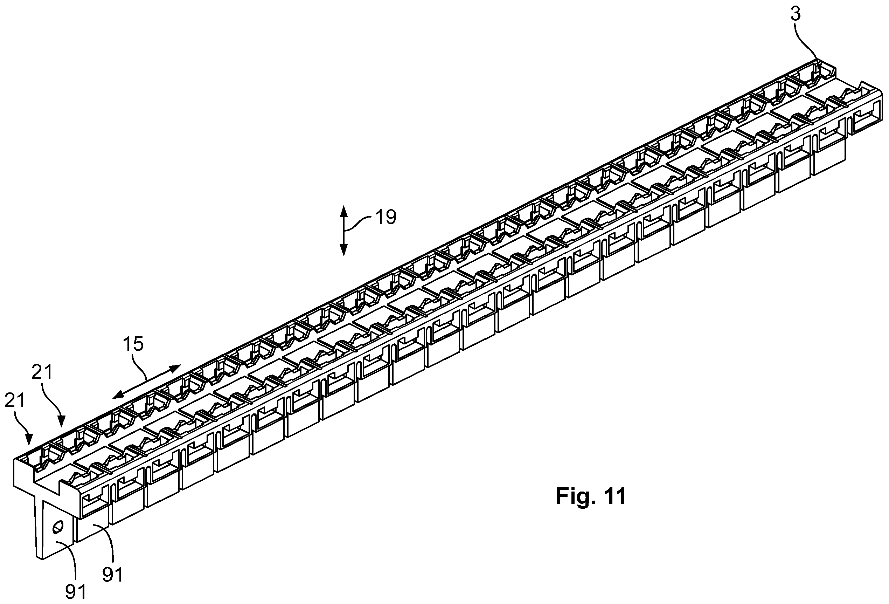

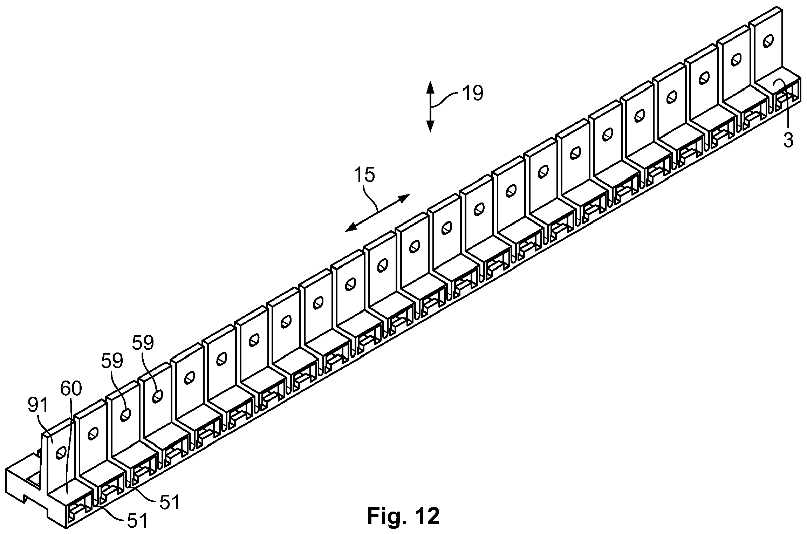

Finally, a second embodiment of a clamp bracket 3 is described with respect to Figs. 11 and 12. Again, for the sake of brevity, only the differences to the clamp bracket 3 described with respect to Figs. 1 to 5, 9 and 10 are explained.

The second embodiment of the clamp bracket 3 is not provided with through holes 59 that extend through the bottom 60 of the clamp bracket 3, because this clamp bracket 3 is not intended for being installed on a surface that extends parallel with the width direction 18 and the longitudinal direction 15.

Instead, the clamp bracket 3 is configured for being installed to a surface that extends parallel with the mounting direction 19 and the longitudinal direction 15.

Thus, installation projections 91 project from the bottom 60 of the clamp bracket 3. The installation projections 91 each have an overall flat shape that extends parallel with the longitudinal direction 15 and the mounting direction 19.

Each of the installation projections 91 is provided with a through hole 59 for mounting the clamp bracket 3 to the structure 11.

In order to ensure that this embodiment of the clamp bracket 3 is bendable, each of the installation projections 91 is separated from the installation projection 91 of the adjacent clamp mounting receptacle 21.

Thus, as for the first embodiment of the clamp bracket, each of the clamp mounting receptacles 21 is connected to the adjacent clamp mounting receptacle 21 via a material bridge 51 with a reduced cross section 53.

### Reference numerals

- 1: Assembly
- 3: Clamp bracket
- 5: Cable clamp
- 7: Set
- 9: Cable
- 11: Structure
- 12: Airframe
- 13: Cable harness
- 15: Longitudinal direction
- 17: Cable direction
- 18: Width direction
- 19: Mounting direction
- 21: Clamp mounting receptacle
- 23: Row
- 25: Fixation element
- 27: Latching Receptacle
- 29: Through-slot
- 31: Cross sectional width
- 33: Compartment
- 35: Cross sectional width
- 37: Cut-out
- 39: Cable tie space
- 41: Cable tie
- 43: Lower part
- 45: Intermediate wall
- 47: Guiding protrusion
- 49: Groove
- 51: Material Bridge
- 53: Cross-section
- 55: Cross-section
- 57: Bending axis
- 59: Through hole
- 60: Bottom
- 61: Receiving section
- 63: Curved surface
- 65: Through slot
- 67: Beam
- 69: Fixation element
- 71: Latching members
- 73: Leg
- 75: Cross sectional width
- 77: Abutment surface
- 79: Free end
- 81: Clamping protrusion
- 83: Free end
- 85: Locking means
- 87: Through slot
- 89: Pair
- 91: Installation projection

## Claims

1. Assembly (1) for fixating at least one cable harness (13) comprising one or more cables (9) to a structure (11), the assembly (1) comprising at least one cable clamp (5) with a receiving section (61) for receiving at least one cable (9) and at least one clamp bracket (3) comprising a plurality of similar clamp mounting receptacles (21) arranged in a row (23), wherein the at least one cable clamp (3) and each clamp mounting receptacle (21) comprise mutually compatible fixation elements (25, 69) that are repeatedly mountable to and releasable from each other.

2. Assembly (1) according to claim 1, wherein the mutually compatible fixation elements (25, 69) are configured as at least one latching member (71) and at least one latching receptacle (27) for the latching member (71).

3. Assembly (1) according to claim 2, wherein the at least one latching member (71) has a hook-shaped cross-section.

4. Assembly (1) according to claim 2 or 3, wherein the at least one cable clamp (5) comprises the latching member (71) and the clamp mounting receptacle (21) comprises the at least one latching receptacle (27).

5. Assembly (1) according to any one of claims 1 to 4, wherein the at least one cable clamp (5) and the clamp mounting receptacle (21) each comprise at least two separate fixation elements (25, 69) which are spaced apart from each other.

6. Assembly (1) according to claim 5, wherein at least one through slot (29) for a cable tie (41) extends through the cable clamp (5) between the at least two fixation elements (25, 69) of the same, when viewed along a mounting direction (19) along which the mutually compatible fixation elements (25, 69) are mounted to each other.

7. Assembly (1) according to claim 5 or 6, wherein a cable tie space (39) for receiving a cable tie (5) of a cable clamp (5) in the mounted state of the cable clamp (5) in the clamp mounting receptacle (21) is arranged between the at least two separate fixation elements (25, 69) of a clamp mounting receptacle (21).

8. Assembly (1) according to claim 7, wherein at least one guiding protrusion (47) for guiding a cable tie (41) on the clamp bracket (3) protrudes from the clamp bracket (3) between the at least one fixation element (25, 69) of a clamp mounting receptacle (21) and the corresponding cable tie space (39).

9. Assembly (1) according to any one of claims 1 to 8, wherein a longitudinal direction (15) of the clamp bracket (3) extends along the row (23) of the clamp mounting receptacles (21), and wherein two fixation elements (25, 69) of a clamp mounting receptacle (21) are arranged on two opposing sides of the clamp bracket (3), spaced apart in a width direction (18) of the clamp bracket (3) and separated from each other by at least one intermediate wall (4), the width direction (18) being perpendicular to the longitudinal direction (15).

10. Assembly (1) according to any one of claims 1 to 9, wherein the at least one cable clamp (5) is configured for being fixated to two adjacent clamp mounting receptacles (21).

11. Assembly (1) according to any one of claims 1 to 10, wherein the at least one cable clamp (5) has two elastically deflectable clamping protrusions (81) for clamping at least one cable (9) of a cable harness (13), the clamping protrusions (81) forming the receiving section (61).

12. Assembly (1) according to any one of claims 1 to 11, wherein the clamp bracket (3) comprises a monolithically formed material bridge (51) between two adjacent clamp mounting receptacles (21), the material bridge (51) having a reduced cross section (53) compared to the clamp bracket (3) in the region of a clamp mounting receptacle (21).

13. Assembly (1) according to any one of claims 1 to 12, the assembly (1) further comprising at least one cable tie (41) for the at least one cable clamp (5), the cable tie (41) being fixated to the cable clamp (5) in an undetachable manner in a mounted state.

14. Set (7) comprising at least one clamp bracket (3) of an assembly (1) according to any one of claims 1 to 13 and a plurality of cable clamps (5) of an assembly (1) according to any one of claims 1 to 13, wherein at least two cable clamps (5) of the plurality of cable clamps (5) are provided with receiving sections (61) that differ in size and/or form from each other.

15. Set comprising at least one clamp bracket (3) of an assembly (1) according to any one of claims 1 to 13 and a plurality of cable clamps (5) of an assembly (1) according to any one of claims 1 to 13, wherein at least one cable clamp (5) of the plurality of cable clamps (5) is configured to be mounted to one clamp mounting receptacle (21) and at least one other cable clamp (5) of the plurality of cable clamps (5) is configured to be mounted to at least two clamp mounting receptacles (21) of the clamp bracket (3).
